# EUROPEAN PATENT APPLICATION

(11) **EP 2 955 163 A1**
(43) Date of publication of application: **16.12.2015**
(21) Application number: 14748821.7
(22) Date of filing: 07.02.2014
(51) Int. Cl.: C03C 27/06, E06B 3/66, E06B 5/00

(54) **MULTILAYER GLASS AND PRODUCTION METHOD FOR SAME**

(30) Priority: 07.02.2013 JP 2013022466
(71) Applicant: Asahi Glass Company, Limited, Tokyo 100-8405 (JP)
(72) Inventor: KOGA, Masahide, Tokyo 100-8405 (JP); ITO, Hiroshige, Tokyo 100-8405 (JP); ENOMOTO, Kotaro, Tokyo 100-8405 (JP)
(74) Representative: Müller-Boré & Partner Patentanwälte PartG mbB
(86) International application number: PCT/JP2014/052901
(87) International publication number: WO 2014/123220

(57) **Abstract**

Multilayer glass is provided that includes a plurality of glass substrates that are arranged to face one another to form a gap between the glass substrates, wherein a plurality of spacers are arranged in the gap, and a periphery of a plurality of glass substrates is sealed by a sealing member. A plurality of glass substrates includes an antireflective layer that is arranged on at least one surface of surfaces of the glass substrates that face one another to form the gap. A distribution density of the spacers with respect to a glass substrate surface that forms the gap is greater than or equal to 2/mm².

## Description

### TECHNICAL FIELD

The present invention relates to multilayer glass and a method of manufacturing multilayer glass.

### BACKGROUND ART

In recent years, multilayer glass having excellent heat insulation performance and soundproof performance is being used in window glass and the like. Multilayer glass includes a plurality of glass substrates that are arranged to face one another and be spaced apart by a predetermined distance. As such, light reflected/refracted by a plurality of glass substrates may interfere with each other to cause interference fringes, which in turn may compromise glass transparency.

Accordingly, techniques have been contemplated for suppressing the occurrence of interference fringes in multilayer glass. For example, Patent Document 1 discloses a method of suppressing the occurrence of interference fringes by focusing on undulation of the glass substrate surfaces as the cause of the interference fringes and using glass substrates surfaces that undulate at a period and an amplitude within predetermined ranges.

### PRIOR ART DOCUMENTS

### PATENT DOCUMENTS

Patent Document 1: Japanese Laid-Open Patent Publication No. H07-97242

### SUMMARY OF THE INVENTION

### PROBLEM TO BE SOLVED BY THE INVENTION

However, to manufacture the multilayer glass disclosed in Patent Document 1, glass substrates with surfaces with an undulation period and amplitude of predetermined values have to be selected, and as such, stable manufacturing of such multilayer glass has been difficult.

The present invention has been conceived in view of the foregoing problems associated with the prior art, and it is an object of the present invention to provide multilayer glass and a manufacturing method thereof in which suppression of the occurrence of interference fringes can be facilitated.

### MEANS FOR SOLVING THE PROBLEM

To solve the above problems, according to one embodiment of the present invention, multilayer glass is provided that includes a plurality of glass substrates that are arranged to face one another to form a gap between the glass substrates, wherein a plurality of spacers are arranged in the gap, and a periphery of a plurality of glass substrates is sealed by a sealing member. A plurality of glass substrates includes an antireflective layer that is arranged on at least one surface of surfaces of the glass substrates that face one another to form the gap. A distribution density of the spacers with respect to a glass substrate surface that forms the gap is greater than or equal to 2/mm².

Also, to solve the above problems, according to another embodiment of the present invention, a method of manufacturing multilayer glass is provided that includes a preparation step of preparing a plurality of glass substrates, a spacer arrangement step of arranging a plurality of spacers on at least one glass substrate surface of a plurality of glass substrates, a laminating step of laminating a plurality of glass substrates such that a gap is formed between the glass substrates via the spacers, and a sealing step of sealing a periphery of a plurality of glass substrates. The preparation step includes an antireflective layer formation step of forming an antireflective layer on at least one surface of surfaces of a plurality of glass substrates that face one another via the gap. The spacer arrangement step includes arranging the spacers such that a distribution density of the spacers with respect to a glass substrate surface that forms the gap is greater than or equal to 2/mm².

### ADVANTAGEOUS EFFECT OF THE INVENTION

In the multilayer glass according to the present invention, by arranging an antireflective layer and also arranging spacers at a predetermined distribution density on the glass substrate surface that forms a gap, the occurrence of interference fringes may be easily suppressed. Also, the multilayer glass as described above may be provided by the method of manufacturing multilayer glass according to the present invention.

### BRIEF DESCRIPTION OF THE DRAWINGS

FIG. 1 is a cross-sectional view of multilayer glass according to an embodiment of the present invention;
FIG. 2 illustrates changes in an interference fringe evaluation in relation to a spacer distribution density in Experiment Examples 1 and 2; and
FIG. 3 illustrates changes in a U value in relation to the spacer distribution density in Experiment Example 1.

### EMBODIMENTS FOR IMPLEMENTING THE INVENTION

In the following, embodiments of the present invention are described with reference to the accompanying drawings. Note, however, that the present invention is not limited to the embodiments described below, and numerous variations and modifications may be made without departing from the scope of the present invention.

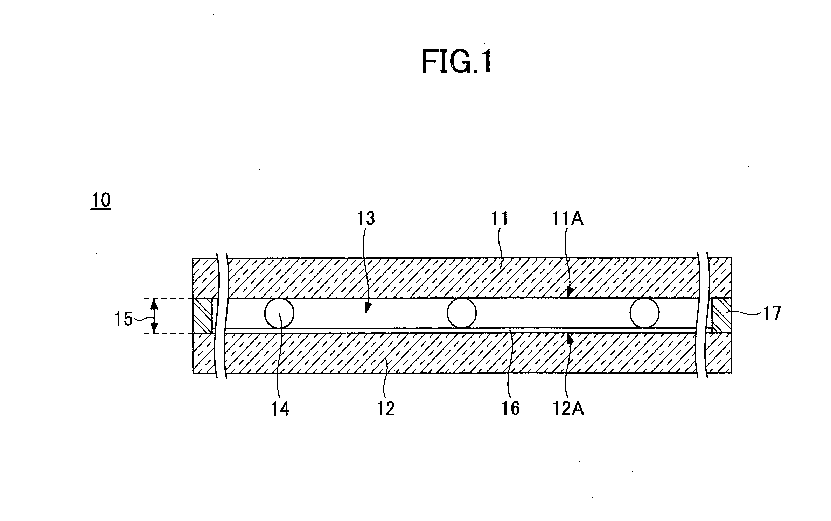

Multilayer glass according to an embodiment of the present invention is described below with reference to FIG. 1. FIG. 1 is a cross-sectional view of the multilayer glass according to the present embodiment.

As illustrated in FIG. 1, glass substrates 11 and 12 are arranged to face each other and are spaced apart by a predetermined distance to form a gap 13 between the glass substrates. Note that although a structure including two glass substrates is illustrated in FIG. 1, the present invention is not limited to such an embodiment and multilayer glass structures including three or more glass substrates are included within the scope of the present invention.

The composition of the glass substrate is not particularly limited and a suitable composition and type of glass substrate may be selected depending on the application. Specifically, for example, various types of glass such as non-alkali glass, soda lime glass, and the like may be used.

Also, the thickness of the glass substrate is not particularly limited and a suitable thickness may be selected depending on the overall thickness of the multilayer glass and the application. As described below, according to an aspect of the present embodiment, the distance between the glass substrates that form a gap may be reduced to thereby reduce the overall thickness of the multilayer glass. Accordingly, for purposes of reducing the overall thickness of the multilayer glass, for example, the glass substrate thickness may preferably be less than or equal to 6.0 mm, and more preferably less than or equal to 3.0 mm. By reducing the thickness of the glass substrate, the overall thickness of the multilayer glass may be reduced such that the multilayer glass of the present embodiment may be used in various applications including those in which conventional multilayer glass could not be used due to thickness constraints.

Also, note that although the thickness of all a plurality of glass substrates may be the same, a plurality of glass substrates may include glass substrates having different thicknesses in some embodiments. That is, in the case of FIG. 1, the glass substrates 11 and 12 may have different thicknesses. Also, in the case where the multilayer glass includes three or more glass substrates, at least one glass substrate may have a thickness that differs from the thickness of the other glass substrates, or the thickness of all the glass substrates may be different, for example. By arranging a plurality of glass substrates to have different thicknesses, the occurrence of interference fringes may be further suppressed.

A spacer 14 is arranged between the glass substrate 11 and the glass substrate 12, and the gap 13 is formed and maintained between the glass substrates 11 and 12. Note that a distance 15 between the glass substrates 11 and 12 that form the gap 13 is not particularly limited and a suitable distance may be selected depending on the multilayer glass thickness and heat insulation requirements, for example.

Note that according to various conventional techniques that have been contemplated, it has been difficult to adequately suppress the occurrence of interference fringes particularly when the distance between the glass substrates that form a gap is relatively short. However, in the present embodiment, even when the distance between the glass substrates that form a gap is short, the occurrence of interference fringes may be suppressed. In this respect, the distance between the glass substrates of the multilayer glass of the present embodiment is preferably arranged to be relatively short such that advantageous effects of suppressing the occurrence of interference fringes that could not be achieved by conventional techniques when the distance between the glass substrates is too short may be achieved by the multilayer glass of the present embodiment.

Also, by reducing the distance between the glass substrates, the overall thickness of the multilayer glass may be reduced and the multilayer glass may be used in a wider variety of applications. Thus, the distance between the glass substrates is preferably arranged to be relatively short from such a viewpoint.

Specifically, the distance between the glass substrates is preferably less than or equal to 100 µm, and more preferably less than or equal to 20 µm. In this case, the lower limit for the glass substrate thickness is not particularly limited and may be selected depending on factors such as the strength and machining accuracy of the spacers. For example, the lower limit may preferably be greater than or equal to 5 µm, and more preferably greater than or equal to 10 µm. Note that in order to arrange the distance between the glass substrates to be at a desired distance as described above, the spacer 14 may be arranged or formed on the glass substrate surface such that its height is equivalent to the desired distance between the glass substrates.

In the case where the multilayer glass includes three or more glass substrates, gaps between glass substrates are formed at two or more locations. In this case, the distance between the glass substrates do not have to be uniform and a suitable distance may be selected for each of the gaps between the glass substrates taking into account the overall thickness of the multilayer glass. Note that even in the case where gaps are formed at two or more locations, each of the gaps between the glass substrates is preferably arranged to be within the above ranges.

A plurality of glass substrates includes an antireflective layer 16 that is arranged on at least one surface of the surfaces of the glass substrate that face one another to form a gap. By arranging an antireflective layer on a surface of a glass substrate that forms a gap, light irradiated on the glass substrate may be prevented from being reflected by the surface of the glass substrate having the antireflective layer formed thereon such that the occurrence of interference fringes may be suppressed.

Note that the antireflective layer used in the present embodiment is not particularly limited and various types of antireflective layers may be used. For example, the antireflective layer may be formed on a surface layer of a glass substrate by treating the glass substrate surface with hydrofluoric acid to form fine asperities on the glass substrate surface. Also, a metal oxide film containing at least one metal selected from a group consisting of zinc, tin, titanium, indium, bismuth, and an oxide of zirconium may be suitably used as the antireflective layer, for example. Further, the method of forming the antireflective layer is not particularly limited, and various thin film formation methods including the CVD method, the sputtering method, and the sol-gel method may be used.

The antireflective layer does not have to be made up of only one layer, but may be a multilayer structure or a laminated structure made up of a plurality of the same type layers or different types of layers, for example. Also, the thickness of the antireflective layer is not particularly limited, and a suitable thickness may be selected in consideration of various factors such as the overall thickness of the multilayer glass, the required interference fringe suppression effects, and the required antireflective layer performance, for example.

Note that the antireflective layer is arranged on at least one surface of the surfaces of the glass substrates that face one another to form a gap. However, the antireflective layer may be arranged on a plurality of surfaces. For example, in the case where the multilayer glass is made up of two glass substrates as illustrated in FIG. 1, the antireflective layer may be arranged only on a surface 12A of the glass substrate 12 facing a surface 11A of the glass substrate 11 as illustrated in FIG. 1, or the antireflective layer may be arranged on both the surface 11A and the surface 12A.

Also, in the case of laminating three or more glass substrates, the antireflective layer is arranged on at least one surface of the surfaces of the glass substrates that face one another. For example, the antireflective layer may be arranged on a plurality of selected surfaces or all surfaces of the glass substrates that face one another to form a gap, for example.

However, interference fringe suppression effects achieved by the antireflective layer alone are rather limited, and in order to substantially suppress the occurrence of interference fringes, predetermined features have to be implemented in the arrangement of the spacers as described below. Note that the shape of the spacer 14 arranged in the gap 13 is not particularly limited as long as the spacer 14 is arranged into a suitable shape for forming and maintaining a predetermined distance between the glass substrates. For example, the spacer 14 may be in various shapes including a spherical shape (bead shape), a cylindrical shape, and a quadrangle pillar shape (cube or cuboid shape). In the case of arranging the spacer 14 using the spray method as described below, for example, the spacer 14 is preferably arranged into a spherical shape such that its orientation does not have to be considered upon arrangement to thereby facilitate the manufacturing process.

The material of the spacer 14 is not particularly limited as long as a suitable material is used for forming and maintaining a predetermined distance between the glass substrates. For example, various types of glass, silica, and synthetic resin (plastics) may be used.

The color of the spacer 14 is not particularly limited, and a suitable color may be selected depending on the application. For example, in an application that allows the use of color, a colored spacer may be used. On the other hand, when the present embodiment is applied to window glass or the like in which transparency is required, a transparent spacer is preferably used.

In the multilayer glass according to the present embodiment, the spacers 14 are arranged on a glass substrate surface that forms a gap at a distribution density that is greater than or equal to 2/mm². Note that the distribution density of the spacers with respect to a glass substrate surface that forms a gap refers to the distribution density of the spacers 14 with respect to a region of a surface (contact surface) on which the spacers 14 are arranged that forms a gap, namely, a region where the glass substrates overlap in planar view. For example, in FIG. 1, the spacer distribution density with respect to the surfaces 11A and 12A is arranged to be within the above-described range.

Also, note that the spacers are preferably not concentrated in one location. Thus, the spacer distribution density corresponds to an average of values obtained based on the number of spacers arranged within a predetermined area of a central region of the glass substrate including the center of gravity of the glass substrate and at least two other locations of the glass substrate. Note that a glass substrate surface subject to measurement refers to a region of the glass substrate surface that forms a gap, and the measurement is not concerned with the microstructural features of the glass substrate surface.

For example, in a case where two 100-mm-square glass substrates completely overlap in planar view to form a gap, and spacers are arranged in the gap, the distribution density of the spacers may be calculated in the following manner. First, with respect to each of three arbitrary locations of the glass substrate surface including a central region of the glass substrate surface and two other regions near diagonal corner portions of the glass substrate surface, the number of spacers arranged within a 8 × 10 mm area corresponding to a predetermined area is obtained, and the number of spacers is divided by the predetermined area (80 mm²). Then, an average of the values obtained by the above calculation for the above three different regions is obtained, and this average value represents the distribution density of the spacers.

By arranging the spacers at a distribution density within the above range, the occurrence of interference fringes in the multilayer glass may be suppressed. That is, by having the spacers arranged at the above distribution density, the distance between the glass substrates may be maintained uniform, and such an effect in combination with the action of the antireflective layer can presumably prevent the occurrence of interference fringes.

Note that the arrangement of the spacers 14 do not necessarily have to be completely uniform as long as the spacers 14 are arranged on the glass substrate surface at the above distribution density throughout the planar direction of glass substrate surface. However, in order to further suppress the occurrence of interference fringes, the spacers 14 are preferably evenly distributed across the overall glass substrate surface. That is, the spacers 14 are preferably arranged such that the distance between the spacers 14 is uniform.

The upper limit for the density distribution of the spacers 14 is not particularly limited. Note, however, that while multilayer glass is generally used in applications that require heat insulation performance, arranging the spacers 14 may result in a decrease in heat insulation performance. Thus, the upper limit for the density distribution of the spacers 14 is preferably selected to a suitable distribution density according to the required heat insulation performance of the multilayer glass.

Specifically, the distribution density of the spacers with respect to the glass substrate surface is preferably less than or equal to 10/mm², and the distribution density of the spacers with respect to the glass substrate surface is more preferably less than or equal to 5/mm². By satisfying the above ranges, multilayer glass having adequate heat insulation performance may be achieved.

The method of arranging the spacers is not particularly limited but may involve preparing a solution containing the spacers with a predetermined shape and size dispersed in a solvent such as alcohol, and spraying the solution on the glass substrate surface, for example. The distribution density of the spacers may be controlled by adjusting the spray time or the amount of solution sprayed, for example. In this case, the glass substrates are preferably laminated and sealed after adequate evaporation of the solution takes place such that the solution does not remain between the glass substrates constituting the multilayer glass.

Alternatively, the spacers with a predetermined shape and size may be arranged on the surface of a glass substrate by an inkjet method, or a screen printing method, for example.

In addition, the multilayer glass according to the present embodiment may also include a low-e layer (heat shielding layer), for example. Note that the low-e layer used is not particularly limited as long as a film that can prevent heat rays from passing through the multilayer glass is used. For example, a silver layer or a layer at least containing silver as a main component is preferably used, and in some embodiments, a multiple layer having the silver layer or the layer at least containing silver as a main component arranged between oxide layers may be used, for example.

The low-e layer may be formed according to the required heat insulation performance of the multilayer glass and the like, and in some embodiments, the low-e layer does not have to be provided. Because the low-e layer generally has low humidity resistance, it is preferably arranged in a space which is sealed by the glass substrate. That is, the low-e layer is preferably arranged on one of the glass substrate surfaces facing one another to form the gap 13. For example, the low-e layer may be formed on one glass substrate surface on which the antireflective layer is not formed of the glass substrate surfaces facing one another to form a gap. Specifically, for example, in the case of FIG. 1, the low-e layer may be arranged on the surface 11A. Also, in the case where three or more glass substrates are laminated, the low-e layer may be arranged on at least one surface of the glass substrate surfaces facing one another to form a gap. For example, the low-e layer may be arranged on a plurality of selected surfaces or all of the surfaces on which the antireflective layer is not formed.

As described above, in the multilayer glass according to the present embodiment, spacers are arranged between a plurality of glass substrates, a plurality of glass substrates are spaced apart, and a gap is formed between the glass substrates. With such a gap formed between the glass substrates, the periphery of a plurality of glass substrates are sealed and fixed by a sealing member 17 that is arranged around the periphery of the glass substrates.

The method of sealing the glass substrates is not particularly limited but may involve arranging a glass frit at the periphery of the glass substrates, and sealing the glass substrates by heating and melting the glass frit, for example. As for the method of heating and melting the glass frit, for example, laser may be irradiated on the glass frit to heat and melt the glass frit.

When sealing the periphery of a plurality of glass substrates, gas such as nitrogen or argon is preferably encapsulated in the gap. By encapsulating gas having low thermal conductivity between the glass substrates, the heat insulation performance of the multilayer glass may be improved. In another embodiment, the pressure within the gap may be reduced to less than atmospheric pressure, preferably to vacuum. By reducing the pressure within the gap to vacuum, the heat insulation performance of the multilayer glass may be improved while arranging the distance between the glass substrates forming the gap in the multilayer glass to a short distance.

In the case where a gap is formed at two of more locations, namely, in the case where three of more glass substrates are used, although all of the gaps formed between the glass substrates may have the same configuration, in some embodiments, different conditions may be implemented in the gaps. For example, the gaps may be encapsulated with different gases, or a given gap of the gaps formed between the glass substrates may be encapsulated with gas or reduced to vacuum.

Although the method of manufacturing the multilayer glass according to the present embodiment is not particularly limited, for example, the multilayer glass may be manufactured by the following process steps.
(a) Preparation step of preparing glass substrates that are to make up the multilayer glass.
(b) Antireflective layer formation step of forming an antireflective layer on at least one surface of opposing surfaces of a plurality of glass substrates when the glass substrates are arranged to face one another via a gap in the preparation step.
(c) Spacer arrangement step of arranging/forming spacers on a surface of one of the glass substrates opposing another glass substrate to form the gap.
(d) Glass laminating step of laminating a plurality of glass substrates and forming the gap between the glass substrates via the spacers.
(e) Sealing step of sealing the periphery of a plurality of laminated glass substrates with a sealing member (material) to seal the gap.

Note that the sealing member of step (e) is arranged or formed around one of a plurality of glass substrates facing each other beforehand. For example, the sealing member may be arranged/formed prior to step (d). The sealing member is not particularly limited and may be a glass frit, or a combination of a metal member and a glass frit, for example. If a glass frit is used, the glass frit may be deposited on the glass substrate surface and heated thereafter to be pre-melted. Then, in step (e), the glass frit may be heated again to bond the periphery of the glass substrates facing one another and thereby seal the gap.

Also, in the case where the multilayer glass is to be made up of three or more laminated glass substrates, the above step (c) and step (d) may be repeated a predetermined number of times. Also, if necessary, a low-e layer may be formed on a predetermined surface of the glass substrates in step (a), for example.

Further, in the case where the gap is to be reduced to vacuum or to be replaced with some other gas, for example, step (d) and step (e) may be performed in a vacuum environment or an environment filled with the replacement gas such that the desired atmosphere may be created between the glass substrates. Alternatively, a hole that communicates with the gap may be formed in one of the glass substrates, and the pressure within the gap may be reduced or gas may be supplied to the gap via such a hole, for example. Then, the hole may be sealed by a cap or the like.

In the multilayer glass according to the present embodiment as described above, an antireflective layer is arranged on a glass substrate surface and the distance between the glass substrates is maintained substantially uniform by arranging spacers at a predetermined distribution density on a surface of a glass substrate that faces another glass substrate to form a gap. In this way, suppression of the occurrence of interference fringes may be facilitated by the synergistic effects of the antireflective layer and the spacer arrangement.

### APPLICATION EXAMPLES

In the following, specific application examples of the present invention are described. Note, however, that the present invention is not limited to these application examples. In the present examples, multilayer glass was manufactured by the following procedures and evaluated thereafter.

### (1) Evaluation Method

### (1-1) Interference Fringe Evaluation

With respect to multilayer glass obtained by the manufacturing process steps described below, light of a white fluorescent lamp (FLR405 N-EDL/M-NU manufactured by Hitachi, Ltd.) or a three-wavelength daylight white fluorescent lamp (FPL55EX-N manufactured by National Corporation) was irradiated on the surface of the multilayer glass, the extent of the occurrence of interference fringes was scored (evaluated) by five people, and the scores of the five people were added up to obtain an average score, which was deemed the interference fringe evaluation for the corresponding multilayer glass. Note that the evaluation was made based on the following criteria, where a lower score indicates effective suppression of interference fringes.

5 points: the occurrence of interference fringes can be confirmed when viewed from a direction perpendicular to the multilayer glass surface in both the case of using the white fluorescent lamp and the case of using the three-wavelength daylight white fluorescent lamp.

4 points: the occurrence of interference fringes cannot be confirmed when viewed from the direction perpendicular to the multilayer glass surface in the case of using the white fluorescent lamp, but the occurrence of interference fringes can be confirmed in the case of using the three-wavelength daylight white fluorescent lamp.

3 points: the occurrence of interference fringes cannot be confirmed even in the case of using the white fluorescent lamp when viewed from the direction perpendicular to the multilayer glass surface, but the occurrence of interference fringes can be confirmed when viewed from an oblique direction with respect to the multilayer glass surface.

2 points: the occurrence of interference fringes cannot be confirmed upon casual inspection when viewed from an oblique direction with respect to the multilayer glass surface, but the occurrence of interference fringes can be confirmed when the multilayer glass is carefully observed at close range.

1 point: the occurrence of interference fringes cannot be confirmed by the naked eye even when the multilayer glass is carefully observed at close range.

### (1-2) U value

The U value was measured in accordance with the procedures defined by JIS A 4710 (2004).

### (2) Multilayer Glass Manufacturing Process

### (2-1) Experimental Example 1

In this experimental example, multilayer glass samples identified as Sample Nos. 1-1 to 1-6 were manufactured by forming an antireflective layer on one glass substrate, forming a low-e layer on another glass substrate, arranging the antireflective layer and the low-e layer to face each other via spherical spacers with a diameter of 10 µm, and creating a vacuum between the glass substrates. The multilayer glass samples were then evaluated. Note that aside from having the spacers arranged at different distribution densities as described below, the Sample Nos. 1-1 to 1-6 have the same configurations.

In the following, process steps for manufacturing the multilayer glass samples of the present experimental example are described.

First, two sheets of non-alkaline glass having dimensions of 370 mm × 370 mm × 0.7 mm were prepared, and an antireflective layer that has undergone a hydrofluoric acid surface treatment was formed on a surface of one glass substrate while a low-e layer made of a silver layer was formed through sputtering on a surface of the other glass substrate.

Spacers were arranged on the surface of the glass substrate (the one glass substrate) on which the antireflective layer had been formed. As for the method of arranging the spacers on the glass substrate surface, a solution having the spacers dispersed therein was sprayed on the glass substrate surface by an LCD spacer spraying apparatus. The spray time was controlled such that the spacers would be arranged at the distribution density indicated in Table 1 (shown below) in each of the samples.

As for the solution having the spacers dispersed therein, a solvent corresponding to a mixture of isopropyl alcohol and pure water mixed at a weight ratio of 7:3 was prepared, and spherical silica beads with a diameter of 10 µm were dispersed in the solvent at a concentration of 0.25 wt%. Note that when performing the next step, it was confirmed that evaporation of the solvent (of the solution having the spacers dispersed therein) had taken place and only the spacers were arranged on the glass substrate. Also, after spraying the solution having the spacers dispersed therein, the glass substrate surface was inspected using an optical microscope (VHX-1000 manufactured by Keyence Corporation) to count the number of spacers within a 8 mm × 10 mm area at three locations including a central region of the glass substrate surface and two locations near diagonal corner portions of the glass substrate surface. Then, an average of values calculated based on the counted numbers was obtained to determine whether the desired spacer distribution density has been achieved in each of the samples.

Then, after arranging a glass frit at a peripheral portion of the surface of the one glass substrate on which the spacers have been arranged, the other glass substrate was laminated on the one glass substrate such that the surface the one glass substrate having the antireflective layer formed thereon and the low-e layer formed on the other glass substrate face each other.

Then, the periphery of the glass substrates were sealed by irradiating a laser beam on the portion where the glass frit has been arranged and melting the glass frit. In order to create a vacuum within the gap between the two glass substrates, operations after arranging the glass frit on the peripheral portion of the glass substrate were carried out inside a vacuum chamber and the air pressure within the gap was arranged to be 1.0 × 10⁻² Pa.

Table 1 (shown below) indicates the interference fringe evaluations and the U value measurement results obtained for each of the above samples. Note that of the samples obtained by the present experiment, Sample Nos. 1-3 to 1-6 correspond to application examples of the present invention whereas Sample Nos. 1-1 and 1-2 correspond to comparative examples.

**[Table 1]**

| SAMPLE NO. | SPACER DISTRIBUTION DENSITY (NUMBER/mm²) | INTERFERENCE FRINGE EVALUATION (POINTS) | U VALUE (W/m²K) |
|---|---|---|---|
| 1-1 | 0.5 | 5 | 1.6 |
| 1-2 | 1 | 4.5 | 1.75 |
| 1-3 | 2 | 2.5 | 1.9 |
| 1-4 | 3 | 2 | 2.1 |
| 1-5 | 10 | 1.5 | 2.6 |
| 1-6 | 20 | 1 | 3 |

### (2-2) Experimental Example 2

In Experimental Example 2, multilayer glass samples identified as Sample Nos. 2-1 and 2-2 were manufactured in a manner similar to Experimental Example 1 except that spherical beads with a diameter of 20 µm were used as spacers. Then, interference fringe evaluations were made on the obtained samples. Table 2 (shown below) indicates the evaluation results. Note that of the samples obtained in the present experiment, Sample No. 2-2 corresponds to an application example of the present invention whereas Sample No. 2-1 corresponds to a comparative example.

**[Table 2]**

| SAMPLE NO. | SPACER DISTRIBUTION DENSITY (NUMBER/mm²) | INTERFERENCE FRINGE EVALUATION (POINTS) |
|---|---|---|
| 2-1 | 1 | 4 |
| 2-2 | 2 | 2 |

### (3) Results

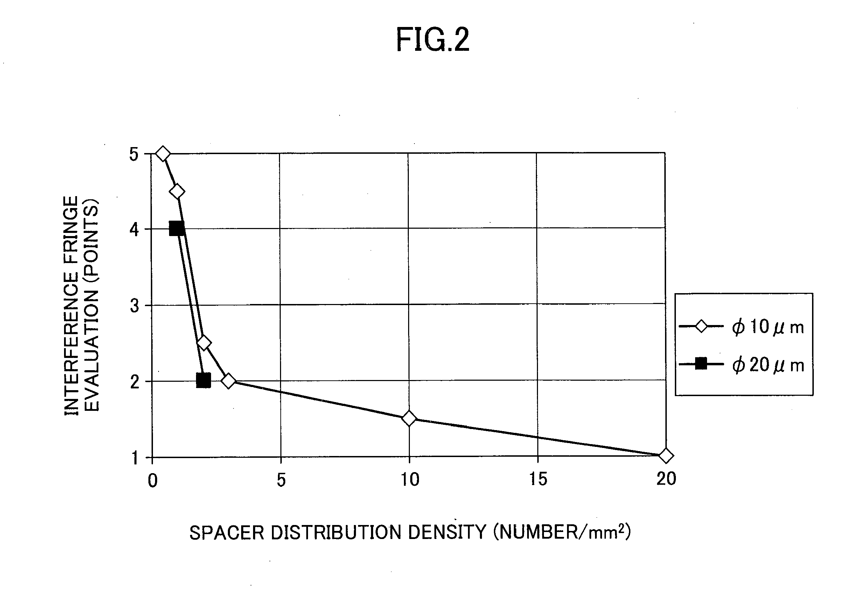

FIG. 2 is a graph illustrating changes in the interference fringe evaluation in relation to the spacer distribution density in Experimental Examples 1 and 2. It can be appreciated from this graph that the interference fringe evaluations follow the same trend regardless of the diameter of the spacers; that is, the interference fringe evaluation scores abruptly decrease at the point where the spacer distribution density is greater than or equal to 2/mm².

When the interference fringe evaluation score is less than or equal to 3 points, this means that the occurrence of interference fringes cannot be confirmed in the visible light region when viewed in a direction perpendicular to the multilayer glass surface. This in turn means that interference fringes are adequately suppressed to a degree that is sufficient for practical use. It could thus be confirmed that interference fringes can be adequately suppressed in the multilayer glass according to the present invention.

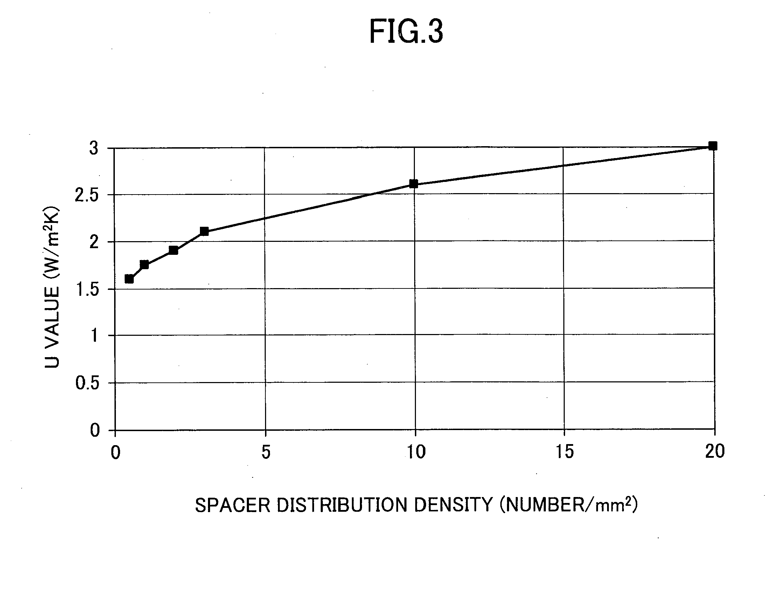

FIG. 3 is a graph illustrating changes in the U value in relation to the spacer distribution density in Experimental Example 1. It can be appreciated from this graph that the U value increases as the spacer distribution density increases. In other words, this means that the heat insulation performance of the multilayer glass is degraded as the spacer distribution density increases. In the present experimental examples, the U value is less than or equal to 3W/m²K, thereby indicating that adequate heat insulation performance for multilayer glass is secured. However, in view of the desirability of heightened heat insulation performance, the U value is preferably less than or equal to 3.0 W/m²K, and more preferably less than or equal to 2.5 W/m²K.

It can be appreciated from these results that the spacer distribution density is preferably less than or equal to 10/mm², and more preferably less than or equal to 5/mm².

Although multilayer glass and a method of manufacturing multilayer glass according to the present invention have been described above with reference to certain illustrative embodiments and application examples, the present invention is not limited to the embodiments and application examples described above, and numerous variations and modifications may be made without departing from the scope of the present invention.

The present application is based on and claims the benefit of priority of Japanese Patent Application No. 2013-022466 filed on February 7, 2013, the entire contents of which are herein incorporated by reference.

### DESCRIPTION OF THE REFERENCE NUMERALS

- 10: multilayer glass
- 11, 12: glass substrate
- 13: gap
- 14: spacer
- 16: antireflective layer
- 17: sealing member

## Claims

1. Multilayer glass comprising a plurality of glass substrates that are arranged to face one another to form a gap between the glass substrates, wherein a plurality of spacers are arranged in the gap, and a periphery of a plurality of glass substrates is sealed by a sealing member, the multilayer glass being **characterized in that**:
a plurality of glass substrates includes an antireflective layer that is arranged on at least one surface of surfaces of the glass substrates that face one another to form the gap;
wherein a distribution density of the spacers with respect to a glass substrate surface that forms the gap is greater than or equal to 2/mm².

2. The multilayer glass according to claim 1, wherein a distance between the glass substrates that form the gap is less than or equal to 100 µm.

3. The multilayer glass according to claim 1 or 2, wherein the distribution density is less than or equal to 10/mm².

4. The multilayer glass according to claim 1 or 2, wherein the distribution density is less than or equal to 5/mm².

5. The multilayer glass according to any one of claims 1 to 4, wherein the spacers have a spherical shape.

6. The multilayer glass according to any one of claims 1 to 5, wherein a plurality of glass substrates includes glass substrates having different thicknesses.

7. The multilayer glass according to any one of claims 1 to 6, wherein a plurality of glass substrates includes a low-e layer that is arranged on a surface on which the antireflective layer is not formed of the surfaces of the glass substrates that face one another to form the gap.

8. The multilayer glass according to any one of claims 1 to 7, wherein the gap has a pressure less than atmospheric pressure.

9. A method of manufacturing multilayer glass including a preparation step of preparing a plurality of glass substrates, a spacer arrangement step of arranging a plurality of spacers on at least one glass substrate surface of a plurality of glass substrates, a laminating step of laminating a plurality of glass substrates such that a gap is formed between the glass substrates via the spacers, and a sealing step of sealing a periphery of a plurality of glass substrates, the method being **characterized in that**:
the preparation step includes an antireflective layer formation step of forming an antireflective layer on at least one surface of surfaces of a plurality of glass substrates that face one another via the gap; and
the spacer arrangement step includes arranging the spacers such that a distribution density of the spacers with respect to a glass substrate surface that forms the gap is greater than or equal to 2/mm².

10. The method of manufacturing multilayer glass according to claim 9, wherein a height of the spacers when arranged on the glass substrate surface is less than or equal to 100 µm.

11. The method of manufacturing multilayer glass according to claim 9 or 10, wherein the spacer arrangement step includes arranging the spacers such that the distribution density is less than or equal to 10/mm².

12. The method of manufacturing multilayer glass according to claim 9 or 10, wherein the spacer arrangement step includes arranging the spacers such that the distribution density is less than or equal to 5/mm².

13. The method of manufacturing multilayer glass according to any one of claims 9 to 12, wherein the spacer arrangement step includes spraying a solution containing the spacers dispersed in a solvent on the glass substrate surface, and drying the solvent of the solution.

14. The method of manufacturing multilayer glass according to any one of claims 9 to 13, wherein the spacers have a spherical shape.

15. The method of manufacturing multilayer glass according to any one of claims 9 to 14, wherein the preparation step includes forming a low-e layer on a surface on which the antireflective layer is not formed of the surfaces of a plurality of glass substrates that face one another to form the gap.
